# EUROPÄISCHE PATENTSCHRIFT

(11) **EP 0 767 726 B1**
(45) Veröffentlichungstag und Bekanntmachung des Hinweises auf die Patenterteilung: **16.12.1998**
(21) Anmeldenummer: 95924306.4
(22) Anmeldetag: 21.06.1995
(51) Int. Cl.: B29B 7/74

(54) **VORRICHTUNG ZUM RÄUMLICH GETRENNTEN UND SYNCHRONEN AUSPRESSEN UND MISCHEN VON ZWEI ODER MEHR FLÜSSIGEN UND/ODER PASTÖSEN KOMPONENTEN**
DEVICE FOR THE SPATIALLY SEPARATE AND SYNCHRONOUS PRESSING OUT AND MIXING OF TWO OR MORE LIQUID AND/OR PASTE COMPONENTS
DISPOSITIF POUR EXTRUDER ET MELANGER SEPAREMENT ET DE MANIERE SYNCHRONISEE DEUX OU PLUSIEURS COMPOSANTS LIQUIDES ET/OU EN PATE

(30) Priorität: 29.06.1994 CH 2066/94
(43) Veröffentlichungstag der Anmeldung: 16.04.1997
(73) Patentinhaber: Sika AG, vorm. Kaspar Winkler & Co., CH-8048 Zürich (CH)
(72) Erfinder: BLEIBLER, Alexander, CH-8406 Winterthur (CH); DIETRICH, Matthias, CH-8640 Rapperswil (CH); ROHR, Hansjörg, CH-8046 Zürich (CH)
(74) Vertreter: Wolf, Eckhard, Dr.-Ing.
(86) Internationale Anmeldenummer: EP9502409
(87) Internationale Veröffentlichungsnummer: WO9600641

(56) Entgegenhaltungen:
- EP-A- 0 370 374
- EP-A- 0 472 448
- DE-A- 2 406 041
- DE-B- 1 286 946
- FR-A- 2 537 050
- FR-A- 2 654 011
- GB-A- 1 205 210
- US-A- 4 958 750

## Beschreibung

Die vorliegende Erfindung betrifft eine Vorrichtung zum räumlich getrennten und synchronen Auspressen und Mischen von zwei oder mehr flüssigen und/oder pastösen Komponenten nach dem Oberbegriff des Anspruchs 1.

Eine Vorrichtung dieser Art zum synchronen Auspressen und Mischen von zwei Komponenten ist im Handel erhältlich; beispielsweise das Produkt Micro-Mix D der Firma Dopag in CH-6330 Cham, Schweiz. Bei diesem Zweikomponenten-Verarbeitungsgerät müssen die zu mischenden Komponenten in zwei getrennte Druckbehälter eingefüllt werden, aus welchen sie über jeweils zugeordnete Dosierkolbenpumpen und Pneumatikventile über einen Mischblock in den Statikmischer eindosiert werden.

Zähflüssige oder thixotrope Komponenten können mit dieser Vorrichtung nicht gut verarbeitet werden, weil diese Komponenten nur mit grossem Aufwand in die Druckbehälter eingefüllt werden können.

Wenn die Komponenten mit dieser Vorrichtung ausgepresst worden sind, dann sind die Druckbehälter mit den entsprechenden einzelnen Komponenten verschmutzt.

Der Aufwand zum Reinigen der verschmutzten Oberflächen ist enorm. Oft ist die Reinigung nur dann möglich, wenn ökologisch bedenkliche Lösungsmittel zu Hilfe genommen werden.

Der Aufwand zum Nachfüllen dieser Vorrichtung mit neuen zu verpressenden Komponenten ist enorm.

Diese Vorrichtung ist zudem sehr teuer und ist nicht geeignet für den Einsatz auf Baustellen.

Bei den Produkten Volu-Mix L, Poly-Mix und Silco-Mix der oben genannten Firma Dopag werden die zu verpressenden Komponenten direkt aus zylinderförmigen und druckfesten Blechbehältern gepumpt und verpresst.

Wenn diese Blechbehälter Beulen aufweisen, was unter Baustellenbedingungen häufig der Fall ist, dann ist die Funktionsfähigkeit dieser Vorrichtungen nicht mehr gewährleistet.

Sowohl beim Nachfüllen der zu verpressenden Komponenten wie auch beim Reinigen dieser Vorrichtungen ist die Gefahr gross, dass das Bedienungspersonal und/oder die nähere Umgebung verschmutzt werden.

Wenn die Druckbehälter nicht gereinigt werden, so fallen diese als Sondermüll an und müssen separat entsorgt werden.

Auf Baustellen wurden bisher mehrkomponentige Baustoffe, insbesondere Klebstoffe und Dichtstoffe, wie folgt verarbeitet.

Die einzelnen Komponenten wurden nur im ungefähren Mischungsverhältnis von Hand dosiert und mit Hilfe eines Rührwerkes, beispielsweise ein elektrisch angetriebenes Handrührwerk, miteinander vermischt.

Dabei traten sowohl beim Mischungsverhältnis als auch bei der Qualität und Dauer des Mischens grosse Schwankungen auf.

Dies hatte natürlich einen negativen Einfluss auf die Qualität des Endproduktes.

Es ist ein Ziel der vorliegenden Erfindung, die oben genannten Nachteile zu überwinden.

Es ist ein weiteres Ziel der vorliegenden Erfindung, eine neue Vorrichtung zum räumlich getrennten und synchronen Auspressen und Mischen von zwei oder mehr flüssigen und/oder pastösen Komponenten zur Verfügung zu stellen.

Mit der erfindungsgemäßen Vorrichtung werden die obigen Ziele erreicht.

Die erfindungsgemäße Vorrichtung zum räumlich getrennten und synchronen Auspressen und Mischen von zwei oder mehr flüssigen und/oder pastösen Komponenten, insbesondere Klebstoffe und Dichtstoffe, ist dadurch gekennzeichnet, daß sich in den genannten Druckbehältern je ein linear angetriebener, insbesondere ein hydraulisch angetriebener Auspreßkolben befindet, welcher entlang der Längsachse des Druckbehälters verschiebbar ist, und daß die genannten Materialführungsschläuche mittels des Kupplungsstücks mit jeweils einem der Säcke verbindbar und bei den Einlaßöffnungen im Verbindungsstück angeschlossen sind. Damit sind aufwendige Dosiervorrichtungen zwischen den Druckbehältern und dem Statikmischer nicht erforderlich.

Bevorzugte Ausführungsformen dieser Erfindung sind in den abhängigen Ansprüchen definiert.

Diese neue Vorrichtung besitzt gegenüber den im Stand der Technik bekannten Vorrichtungen folgende Vorteile:
- die gegebenenfalls zu reinigenden Teile der Vorrichtung sind mit herkömmlichen Methoden von Hand gut, rasch, einfach und mit sehr wenig Aufwand zu reinigen;
- die Abfallmenge bleibt klein;
- die Vorrichtung ist nach einem Auspreßvorgang im wesentlichen sauber, so daß unmittelbar danach oder zu einem späteren Zeitpunkt die gleichen Komponenten ohne Zwischenreinigung ausgepreßt werden können;
- die Vorrichtung ist sehr einfach und sicher in der Handhabung;
- die Qualität der gemischten Komponenten ist konstant und so gut wie für die Anwendung notwendig;
- die Vorrichtung weist eine hohe Verarbeitungsleistung auf;
- die zu verpressenden Komponenten sind getrennt voneinander in einem geschlossenen System gelagert und kommen erst im gemischten Zustand mit der Umgebung in Kontakt.

Im folgenden Teil werden mögliche Ausführungsformen der vorliegenden Erfindung beschrieben, wobei Bezug auf die Figuren genommen wird.

Bei diesen Ausführungsformen wird das Auspressen eines Zwei-Komponenten-Gemisches mit einem volumetrischen Mischungsverhältnis von 1:1 beschrieben.

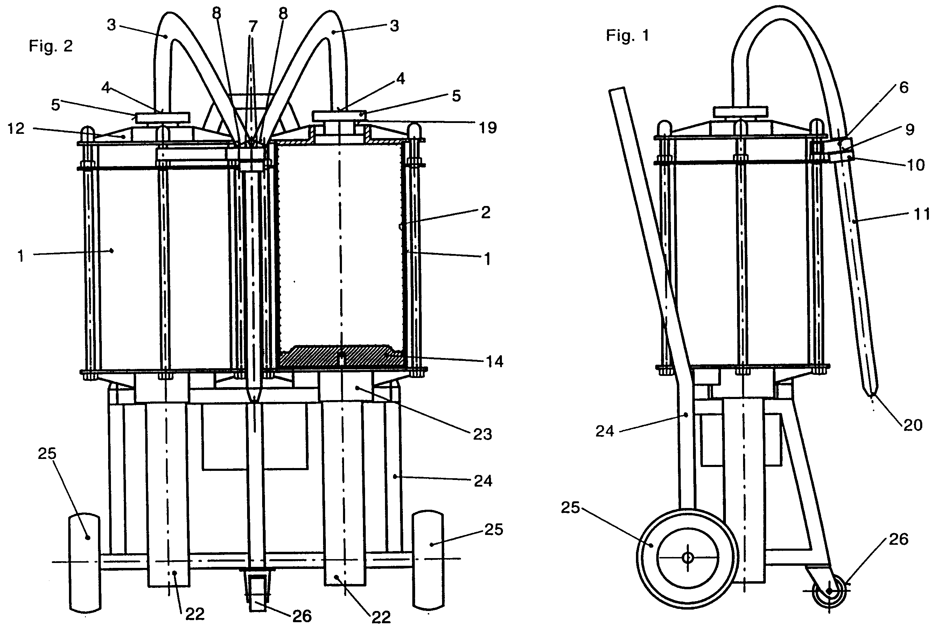

Figur 1 zeigt eine Seitenansicht einer erfindungsgemässen Vorrichtung.

Figur 2 zeigt einen Aufriss einer erfindungsgemässen Vorrichtung, wobei ein Druckbehälter 1 aufgeschnitten ist.

Figur 3 zeigt einen Querschnitt durch einen Druckbehälter 1 mit vollständig ausgepresster Komponente.

Figur 4 zeigt einen Querschnitt durch einen Auspresskolben 14.

Figur 5 zeigt einen Querschnitt durch einen Deckel 12.

Figur 6 zeigt einen Grundriss eines Deckels 12.

Die erfindungsgemässe Vorrichtung ist vorzugsweise auf einem Rahmen 24 fest montiert. An diesem Rahmen 24 sind Räder 25 montiert, insbesondere drei Räder 25, wobei eines dieser Räder 25 als Lenkrolle 26 dient.

Die beiden zylinderförmigen Druckbehälter 1 zur Aufnahme der auszupressenden, in Säcken 2 abgefüllten Komponenten haben einen Innendurchmesser von 250 mm, eine Höhe von 450 mm und eine Wandstärke von 5 mm.

In jedem Druckbehälter 1 befindet sich ein Auspresskolben 14. Die der auszupressenden Komponente zugewandte Seite des Auspresskolbens 14 weist an der Peripherie eine mit einer Dichtungslippe 16 versehene Rinne 17 auf.

Diese Rinne 17 ist dergestalt, dass sie den zusammengepressten Sack 2 aufnehmen kann.

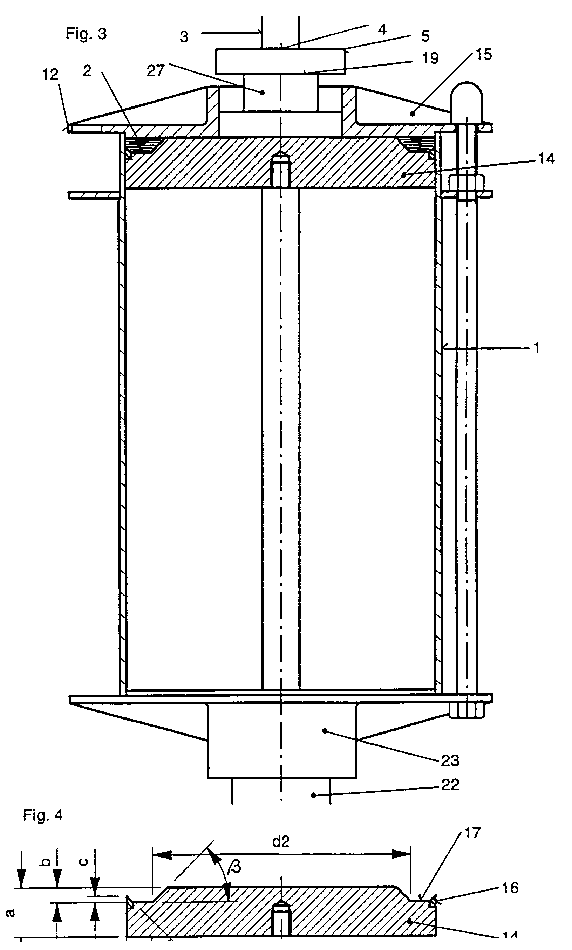

Der Auspresskolben 14 hat vorzugsweise die in der Tabelle 1 angegebenen Dimensionen; dabei wird Bezug auf Figur 4 genommen.

**Tabelle 1**

| |
|---|
| a = 40 mm |
| b = 12 mm |
| c = 5 mm |
| d1 = 250 mm |
| d2 = 210 mm |
| α = 45 ° |
| β = 45 ° |

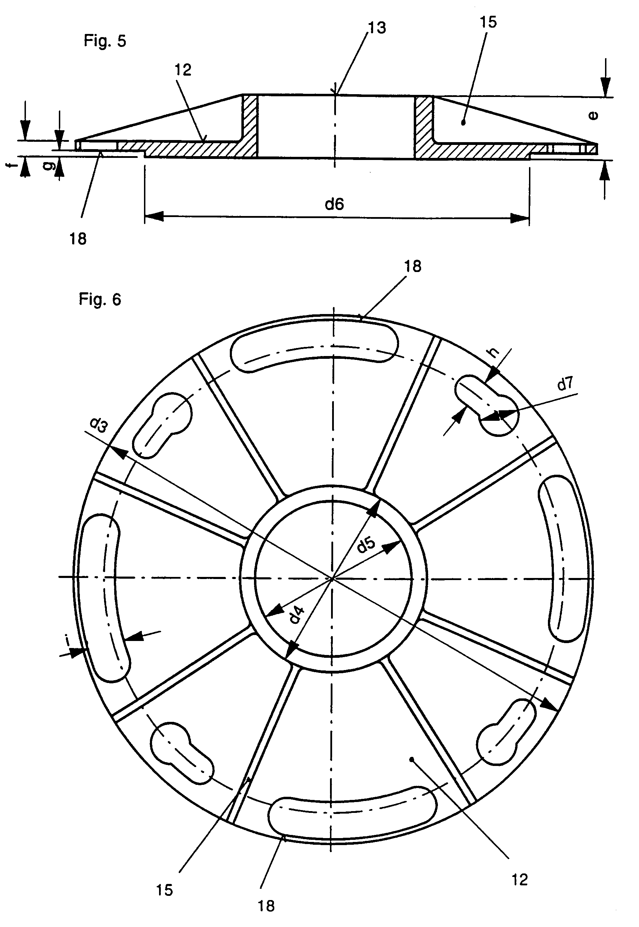

Der den Druckbehälter 1 abschliessende Deckel 12 hat vorzugsweise die in der Tabelle 2 angegebenen Dimensionen; dabei wird Bezug auf die Figuren 5 und 6 genommen.

**Tabelle 2**

| |
|---|
| d3 = 340 mm |
| d4 = 120 mm |
| d5 = 100 mm |
| d6 = 250 mm |
| d7 = 26 mm |
| e = 40 mm |
| f = 10 mm |
| g = 4 mm |
| h = 18 mm |
| i = 24 mm |

Die Materialführungsschläuche 3 weisen an ihren Einlassöffnungen 4 ein Kupplungsstück 5 auf.

Das Gegenstück 27 zu diesem Kupplungsstück 5 ist integraler Bestandteil eines Sackes 2, insbesondere eines Rundbodensackes, in welchem sich die auszupressende Komponente befindet.

Solche Anschlusssysteme sind in verschiedenen Formen im Handel erhältlich.

Materialführungsschläuche 3 sind ebenfalls im Handel erhältlich. Es können Hydraulikschläuche verwendet werden mit einem Innendurchmesser von 20 mm, einer Wandstärke von 10 mm und einer Länge von 450 mm.

Diese Materialführungsschläuche 3 münden in ein Verbindungsstück 6. Dieses Verbindungsstück 6 hat die gleiche Anzahl an Kanälen 7 wie Druckbehälter 1 vorhanden sind.

Die Druckbehälter 1 und das Verbindungsstück 6 können aus Stahl, Aluminium oder verstärktem Kunststoff, einschliesslich Kombinationen davon, hergestellt sein.

Die Materialführungsschläuche 3 sind beispielsweise mit im Handel erhältlichen Schlauchbriden an die Einlassöffnungen 8 der Kanäle 7 im Verbindungsstück 6 montiert.

Die Auslassöffnungen 9 der Kanäle 7 im Verbindungsstück 6 sind von der Einlassöffnung 10 eines im Handel erhältlichen Statikmischers 11 umschlossen.

Der Statikmischer 11 kann an das Verbindungsstück 6 mittels Ueberwurfmutter und Gewinde oder eines Schnellverschlusses montiert sein.

Zum Betrieb der erfindungsgemässen Vorrichtung kann eine im Handel erhältliche Hydraulik mit entsprechender Förderleistung verwendet werden.

Das Mischungsverhältnis der auzupressenden Komponenten kann eingestellt werden entweder durch entsprechende Durchmesserverhältnisse der Druckbehälter 1 oder durch entsprechende Geschwindigkeitsverhältnisse, mit welchen sich die Auspresskolben 14 bewegen.

Eine mögliche Ausführungsform einer erfindungsgemässen Vorrichtung wird wie folgt in Betrieb genommen und bedient.

Die auf einem mit Rädern 25 versehenen Rahmen 24 montierte erfindungsgemässe Vorrichtung wird an ihren Einsatzort gebracht.

Bei der ersten Inbetriebnahme werden die Deckel 12 entriegelt und entweder entfernt oder aufgeklappt.

Die mit den zu verpressenden Komponenten gefüllten Säcke 2, insbesondere Rundbodensäcke, werden aus ihrer Umverpackung, beispielsweise Kartonschachteln, herausgenommen und in die Druckbehälter 1 eingeführt. Dabei müssen die Böden der Säcke 2 gegen die Auspresskolben 14 gerichtet sein.

Dann werden die Druckbehälter 1 mit den Deckeln 12 wieder geschlossen und verriegelt.

Dabei muss das im Sack 2 integrierte Gegenstück 27 zum am Materialführungsschlauch 3 befestigte Kupplungsstück 5 aus der zentrischen Bohrung 13 im Deckel 12 herausragen.

Der das genannte Gegenstück 27 abschliessende Verschluss wird entfernt.

Das Gegenstück 27 und das Kupplungsstück 5 werden miteinander verbunden.

Danach wird der Statikmischer 11 an das Verbindungsstück 6 montiert.

Somit ist die erfindungsgemässe Vorrichtung betriebsbereit.

Zum Auspressen und Mischen der Komponenten muss nur noch die Hydraulik in Betrieb genommen werden.

Wenn die Säcke 2 vollständig ausgepresst sind, werden Gegenstück 27 und Kupplungsstück 5 wieder voneinander getrennt.

Danach werden die Deckel 12 entriegelt und entweder entfernt oder aufgeklappt.

Die zusammengepressten Säcke 2 werden herausgenommen und können mit dem früher entfernten Verschluss verschlossen werden.

Danach werden die Auspresskolben 14 in die Ausgangsposition gebracht und neue Säcke 2 werden eingeführt.

Die weiteren Schritte werden gemäss obigen Angaben ausgeführt.

Eine Reinigung der erfindungsgemässen Vorrichtung ist nicht notwendig.

Bei diesem Nachfüllen muss kein neuer Statikmischer 11 montiert werden.

Dieser Nachladevorgang kann so oft wie notwendig wiederholt werden.

Nach Beendigung der Arbeit oder bei einem längeren Betriebsunterbruch, beispielsweise zu Beginn des Wochenendes, kann die erfindungsgemässe Vorrichtung ohne weitere Manipulationen oder Arbeitsvorgänge stehen gelassen werden.

Vor der Wiederinbetriebnahme nach einem solchen Unterbruch muss dann lediglich der alte Statikmischer 11 durch einen neuen Statikmischer 11 ersetzt werden, wenn die Dauer des Betriebsunterbruches zu einem Aushärten der Komponenten im Statikmischer 11 geführt hat.

Bei einem Wechsel auf andere auszupressende Komponenten können die Materialführungsschläuche 3 und das Verbindungsstück 6 entweder gereinigt oder durch neue Teile ersetzt werden.

Alte, ungereinigte Teile können wieder verwendet werden, wenn die früheren Komponenten wieder ausgepresst werden.

Die erfindungsgemässe Vorrichtung kann auch zum Verpressen einer einzigen Komponente, beispielsweise 1-K-Klebstoffe und 1-K-Dichtstoffe, verwendet werden.

Mit der erfindungsgemässen Vorrichtung können flüssige und/oder pastöse, einschliesslich zähflüssige und thixotrope, Komponenten ausgepresst und vermischt werden.

In der vorliegenden Erfindung werden die folgenden Bezugszeichen verwendet:
- 1: Druckbehälter
- 2: Säcke
- 3: Materialführüngsschläuche
- 4: Einlassöffnung des Materialführungsschlauches 3
- 5: Kupplungsstück
- 6: Verbindungsstück
- 7: Kanäle
- 8: Einlassöffnungen im Verbindungsstück 6
- 9: Auslassöffnungen im Verbindungsstück 6
- 10: Einlassöffnung des Statikmischers 11
- 11: Statikmischer
- 12: Deckel
- 13: Bohrung
- 14: Auspresskolben
- 15: Verstärkungsrippen
- 16: Dichtungslippe
- 17: Rinne
- 18: Griffe
- 19: Auslassöffnung des Sackes 2
- 20: Auslassöffnung des Statikmischers 11
- 21: Endstück
- 22: Hydraulikantrieb
- 23: Boden des Druckbehälters 1
- 24: Rahmen
- 25: Räder
- 26: Lenkrolle
- 27: Gegenstück.

## Patentansprüche

1. Vorrichtung zum räumlich getrennten und synchronen Auspressen und Mischen von zwei oder mehr flüssigen und/oder pastösen Komponenten, insbesondere Klebstoffe und Dichtstoffe, mit wenigstens zwei zylinderförmigen, je einen verriegelbaren und entweder entfernbaren oder aufklappbaren Deckel (12) mit einer zentrischen Bohrung (13) umfassenden Druckbehältern (1) zur Aufnahme der auszupressenden, in Säcken (2) abgefüllten Komponenten, wenigstens zwei Materialführungsschläuchen (3), deren Einlaßöffnungen (4) ein Kupplungsstück (5) für ein Anschlußsystem, insbesondere einen Schnellverschluß, aufweisen, einem Statikmischer (11), und einem Verbindungsstück (6) mit wenigstens zwei Kanälen (7), dessen Auslaßöffnungen (9) von der Einlaßöffnung (10) des Statikmischers (11) umschlossen sind, **dadurch gekennzeichnet**, daß sich in den genannten Druckbehältern (1) je ein linear angetriebener Auspreßkolben (14) befindet, welcher entlang der Längsachse des Druckbehälters (1) verschiebbar ist, und daß die genannten Materialführungsschläuche (3) mittels des Kupplungsstücks (5) mit jeweils einem der Säcke (2) verbindbar und bei den Einlaßöffnungen (8) im Verbindungsstück (6) angeschlossen sind.

2. Vorrichtung nach Anspruch 1, dadurch gekennzeichnet, daß die Auspreßkolben (14) hydraulisch angetrieben sind.

3. Vorrichtung nach Anspruch 1 oder 2, **dadurch gekennzeichnet**, dass jeder zylinderförmige Druckbehälter (1) derart geformt ist, dass er einen Sack (2) mit einem Durchmesser von 80 mm bis 400 mm, insbesondere 150 mm bis 300 mm, und einer Höhe von 150 mm bis 500 mm, insbesondere 250 mm bis 450 mm, aufnehmen kann und dieser Sack (2) beim Betrieb der Vorrichtung eng an der Innenwand des Druckbehälters (1) anliegt.

4. Vorrichtung nach einem der Ansprüche 1 bis 3, **dadurch gekennzeichnet**, dass der den Druckbehälter (1) abschliessende Deckel (12) eine zentrische Bohrung (13) mit einem Durchmesser von 20 mm bis 100 mm, insbesondere 60 mm bis 80 mm, aufweist, und dass dieser Deckel (12) entweder planar ist oder in Materialfliessrichtung gebeult ist, und gegebenenfalls noch Verstärkungsrippen (15) aufweist.

5. Vorrichtung nach einem der Ansprüche 1 bis 4, **dadurch gekennzeichnet**, dass die den auszupressenden Komponenten zugewandte Seite des Auspresskolbens (14) an der Peripherie eine mit einer Dichtungslippe (16) versehene Rinne (17) aufweist, welche die ehemals zylindrische Seitenwand des zusammengepressten Sackes (2) aufnehmen kann.

6. Vorrichtung nach einem der Ansprüche 1 bis 5, **dadurch gekennzeichnet**, dass der Innendurchmesser des genannten Druckbehälters (1) dem Durchmesser des genannten Auspresskolbens (14) entspricht.

7. Vorrichtung nach einem der Ansprüche 1 bis 6, **dadurch gekennzeichnet**, dass der genannte Deckel (12) zwei Griffe (18) aufweist und an den genannten Druckbehälter (1) mittels Bajonettverschluss fixiert ist, und dass die Innenseite dieses Deckels (12) auf dem gesamten Umfang des Innendurchmesser des Druckbehälters (1) über eine Distanz von 1 mm bis 8 mm, insbesondere 2 mm bis 4 mm, entlang der Langsachse des Druckbehälters (1) in den Druckbehälter (1) eindringt.

8. Vorrichtung nach einem der Ansprüche 1 bis 7, **dadurch gekennzeichnet**, dass die Einlassöffnung (4) des Materialführungsschlauches (3) mit einem solchen Schnellverschlusskupplungsstück (5) versehen ist, welches mit der Auslassöffnung (19) des genannten Sackes (2) verbunden werden kann.

9. Vorrichtung nach einem der Ansprüche 1 bis 8, **dadurch gekennzeichnet**, dass das Verhältnis der Volumen der einzelnen Materialführungsschläuche (3) proportional ist zum jeweiligen Mischungsverhältnis der zu verpressenden Komponenten.

10. Vorrichtung nach einem der Ansprüche 1 bis 9, **dadurch gekennzeichnet**, dass an die Auslassöffnung (20) des Statikmischers (11) ein Endstück (21) zum Applizieren der ausgepressten und vermischten Komponenten fixiert ist.

11. Vorrichtung nach einem der Ansprüche 1 bis 10, **dadurch gekennzeichnet**, dass der Hydraulikantrieb (22) an den Boden (23) des genannten Druckbehälters (1) fixiert ist.

## Claims

1. A device for the spatially separate, synchronous pressing out and mixing of two or more liquid and/or paste components, n particular adhesives and sealants, comprising at least two cylindrical pressure containers (1), which include a lockable, and either removable or openable cover (12) with a central bore (13) therein, for receiving the components to be pressed out of filled sacks, at least two material feed hoses (3), the inlet apertures (4) of which have a coupler (5) for a connecting system, in particular a quick-release coupler, a static mixer (11), and a connector (6) with at least two channels (7), the outlet apertures (9) of the connector are enclosed by the inlet aperture (10) of the static mixer (11), characterized in that a linearly driven ejection piston (14) is provided in said pressure containers (1), which ejection piston is movable along the longitudinal axis of the pressure container (1), and that said material feed hoses (3) being connected by means of the coupler (5) to each one of the sacks (2) and are connected at the inlet apertures (8) in the connector (6).

2. The device according to Claim 1, characterized in that the ejection pistons (14) are hydraulically driven.

3. The device according to Claim 1 or 2, characterized in that each cylindrical pressure container (1) is formed such that it can receive a sack (2) therein with a diameter of 80 mm to 400 mm, in particular 150 mm to 300 mm, and a height of 150 mm to 500 mm, in particular 250 mm to 450 mm, and the sack (2) rests snugly on the inside wall of the pressure container (1) during operation of the device.

4. The device according to one of the Claims 1 to 3, characterized in that the cover (12) closing off the pressure container (1) has a central bore (13) with a diameter of 20 mm to 100 mm, in particular 60 mm to 80 mm, and that the cover (12) is either planar or is indented in a material flow direction, and has, if necessary, additional reinforcing ribs (15).

5. The device according to one of the Claims 1 to 4, characterized in that a side of the ejection piston (14) facing the components to be pressed out has a trough (17) provided with a sealing lip (16) on the periphery thereof, which trough can receive the former cylindrical sidewall of the compressed sack (2).

6. The device according to one of the Claims 1 to 5, characterized in that an inside diameter of said pressure container (1) corresponds with a diameter of said ejection piston (14).

7. The device according to one of the Claims 1 to 6, characterized in that said cover (12) has two handles (18) and is fixed to said pressure container (1) by means of a bayonet lock, and that an inside of the cover (12) penetrates on the entire circumference of the inside diameter of the pressure container (1) over a distance of 1 mm to 8 mm, in particular 2 m to 4 mm, along the longitudinal axis of the pressure container (1) into the pressure container (1).

8. The device according to one of the Claims 1 to 7, characterized in that the quick-release coupler (5) of the inlet aperture (4) of the material feed hose (3) can be connected to an outlet aperture (19) of said sack (2).

9. The device according to one of the Claims 1 to 8, characterized in that the ratio of the volumes of the individual material feed hoses (3) is proportional to the respective mixture ratio of the components to be pressed.

10. The device according to one of the Claims 1 to 9, characterized in that an end piece (21) for applying the pressed out and mixed components is fixed to an outlet aperture (20) of the static mixer (11).

11. The device according to one of the Claims 1 to 10, characterized in that a hydraulic drive (22) is fixed to a bottom (23) of said pressure container (1).

## Revendications

1. Dispositif pour exprimer séparément et de manière synchronisée deux ou plus de deux composants liquides et/ou pâteux, notamment des produits adhésifs et des produits d'étanchéité, et les mélanger, avec au moins deux récipients sous pression (1) cylindriques, pourvus chacun d'un couvercle (12), pouvant être verrouillé et déposé ou ouvert par rabattement et présentant un perçage central (13), et destinés à recevoir les composants à exprimer, remplis dans des sacs (2), avec au moins deux flexibles (3) de guidage de produit, dont les ouvertures d'admission (4) présentent un élément d'accouplement (5) pour un système de raccordement, notamment à fermeture rapide, avec un mélangeur statique (11), et avec un connecteur (6) présentant au moins deux canaux (7), dont les ouvertures de sortie (9) sont entourées par l'ouverture d'admission (10) du mélangeur statique (11), **caractérisé** en ce qu'un piston exprimeur (14) à entraînement linéaire se trouve dans chacun desdits récipients sous pression (1), piston qui peut être déplacé le long de l'axe longitudinal du récipient sous pression (1), et en ce que lesdits flexibles (3) de guidage de produit peuvent, au moyen de l'élément d'accouplement (5), être respectivement reliés aux sacs (2), et sont raccordés à des ouvertures d'admission (8) dans le connecteur (6).

2. Dispositif selon la revendication 1, **caractérisé** en ce que les pistons exprimeurs (14) sont entraînés hydrauliquement.

3. Dispositif selon la revendication 1 ou 2, **caractérisé** en ce que chaque récipient sous pression cylindrique (1) présente une forme telle qu'il peut recevoir un sac (2) d'un diamètre de 80 mm à 400 mm, notamment 150 mm à 300 mm, et d'une hauteur de 150 mm à 500 mm, notamment 250 mm à 450 mm, et que ce sac (2) s'applique étroitement, lors du fonctionnement du dispositif, contre la paroi intérieure du récipient sous pression (1).

4. Dispositif selon une des revendications 1 à 3, **caractérisé** en ce que le couvercle (12) fermant le récipient sous pression (1) présente un perçage central (13) d'un diamètre de 20 mm à 100 mm, notamment 60 mm à 80 mm, et en ce que ce couvercle (12) est soit plan, soit bombé dans la direction d'écoulement du produit, et présente éventuellement en outre des nervures de renforcement (15).

5. Dispositif selon une des revendications 1 à 4, **caractérisé** en ce que le côté du piston exprimeur (14) qui est tourné vers les composants à exprimer présente, sur la périphérie, une rigole (17) qui est pourvue d'une lèvre d'étanchéité (16) et qui peut recevoir la paroi latérale auparavant cylindrique du sac comprimé (2).

6. Dispositif selon une des revendications 1 à 5, **caractérisé** en ce que le diamètre intérieur dudit récipient sous pression (1) correspond au diamètre dudit piston exprimeur (14).

7. Dispositif selon une des revendications 1 à 6, **caractérisé** en ce que ledit couvercle (12) présente deux poignées (18) et est fixé sur ledit récipient sous pression (1) au moyen d'une fermeture à baïonnette, et en ce que le côté intérieur de ce couvercle (12) s'enfonce dans le récipient sous pression (1), sur toute la circonférence du diamètre intérieur du récipient sous pression (1), sur une distance, le long de l'axe longitudinal du récipient sous pression (1), de 1 mm à 8 mm, notamment de 2 mm à 4 mm.

8. Dispositif selon une des revendications 1 à 7, **caractérisé** en ce que l'ouverture d'admission (4) du flexible (3) de guidage de produit est pourvue d'un élément d'accouplement (5) à fermeture rapide qui peut être assemblé à l'ouverture de sortie (19) dudit sac (2).

9. Dispositif selon une des revendications 1 à 8, **caractérisé** en ce que le rapport des volumes des différents flexibles (3) de guidage de produit est proportionnel au rapport respectif de mélange des composants à exprimer.

10. Dispositif selon une des revendications 1 à 9, **caractérisé** en ce qu'un embout (21) pour appliquer les composants exprimés et mélangés est fixé sur l'ouverture de sortie (20) du mélangeur statique (11).

11. Dispositif selon une des revendications 1 à 10, **caractérisé** en ce que l'entraînement hydraulique (22) est fixé sur le fond (23) dudit récipient sous pression (1).
